# EUROPÄISCHE PATENTANMELDUNG

(11) **EP 4 322 266 A2**
(43) Veröffentlichungstag der Anmeldung: **14.02.2024**
(21) Anmeldenummer: 23183538.0
(22) Anmeldetag: 05.07.2023
(51) Int. Cl.: H01M 8/04007, H01M 8/04119, H01M 8/0662

(54) **BRENNSTOFFZELLENABGASANLAGE**

(30) Priorität: 11.08.2022 DE 102022120291
(71) Anmelder: Purem GmbH, 66539 Neunkirchen (DE)
(72) Erfinder: Gaiser, Gerd, Reutlingen (DE)
(74) Vertreter: Ruttensperger Lachnit Trossin Gomoll

(57) **Zusammenfassung**

Eine Brennstoffzellenabgasanlage, insbesondere für ein Fahrzeug, umfasst eine von Brennstoffzellenabgas durchströmbare erste Brennstoffzellenabgas-Kühleinheit (30) zum Abführen von Wärme aus dem Brennstoffzellenabgas, im Bereich oder/und stromabwärts der ersten Brennstoffzellenabgas-Kühleinheit (30) eine erste Abscheideeinheit (34) zum Abscheiden von im Brennstoffzellenabgas enthaltenem Kondensat sowie im Bereich oder/und stromabwärts der ersten Abscheideeinheit eine Brennstoffzellenabgas-Heizeinheit (36) zum Erwärmen des Brennstoffzellenabgases.

## Beschreibung

Die die vorliegende Erfindung betrifft eine Brennstoffzellenabgasanlage, über welche beispielsweise in einem Fahrzeug das von einer zur Erzeugung elektrischer Energie betriebenen Brennstoffzelle ausgestoßene Brennstoffzellenabgas zur Umgebung abgegeben werden kann.

Zur Erzeugung elektrischer Energie in einer Brennstoffzelle werden einem Anodenbereich der Brennstoffzelle Wasserstoff bzw. ein Wasserstoff enthaltendes Gas und einem Kathodenbereich der Brennstoffzelle Sauerstoff bzw. ein Sauerstoff enthaltendes Gas, beispielsweise Luft, zugeführt. An einem Anodenabgasauslass des Anodenbereichs der Brennstoffzelle wird ein wasserstoffentreichertes Gas als Brennstoffzellenabgas abgegeben. An einem Kathodenabgasauslass des Kathodenbereichs der Brennstoffzelle wird ein sauerstoffentreichertes Gas als Brennstoffzellenabgas abgegeben. Abhängig vom Typ der Brennstoffzelle enthält primär das am Kathodenbereich der Brennstoffzelle abgegebene Brennstoffzellenabgas oder primär das am Anodenbereich der Brennstoffzelle abgegebene Brennstoffzellenabgas einen vergleichsweise großen Anteil an Wasser bzw. Wasserdampf. Wird stark mit Wasserdampf angereichertes Brennstoffzellenabgas mit einer relativen Feuchte im Bereich von 90-100 % über eine Brennstoffzellenabgasanlage zur Umgebung abgegeben, besteht insbesondere bei vergleichsweise niedrigen Umgebungstemperaturen die Gefahr, dass bei Kontakt mit der Umgebungsluft die Temperatur des Brennstoffzellenabgases stark abnimmt, was zum Auskondensieren von Wasser aus dem Brennstoffzellenabgas und damit zu einer starken Nebelbildung führen kann. Eine derartige Nebelbildung kann allein aufgrund der optischen Erscheinung als unangenehm und unerwünscht empfunden werden und führt insbesondere bei sehr niedrigen Umgebungstemperaturen zu der Gefahr, dass bei stehendem Fahrzeug in dem Bereich, in welchem das Brennstoffzellenabgas zur Umgebung austritt, eine Eisbildung auf dem Untergrund unter dem Fahrzeug auftritt.

Es ist die Aufgabe der vorliegenden Erfindung, eine Brennstoffzellenabgasanlage, insbesondere für ein Fahrzeug, vorzusehen, mit welcher eine Nebelbildung in dem zur Umgebung abgegebenen Brennstoffzellenabgas im Wesentlichen verhindert werden kann.

Erfindungsgemäß wird diese Aufgabe gelöst durch eine Brennstoffzellenabgasanlage, insbesondere für ein Fahrzeug, umfassend:
- eine von Brennstoffzellenabgas durchströmbare erste Brennstoffzellenabgas-Kühleinheit zum Abführen von Wärme aus dem Brennstoffzellenabgas,
- im Bereich oder/und stromabwärts der ersten Brennstoffzellenabgas-Kühleinheit, eine erste Abscheideeinheit zum Abscheiden von im Brennstoffzellenabgas enthaltenem Kondensat,
- im Bereich oder/und stromabwärts der ersten Abscheideeinheit, eine Brennstoffzellenabgas-Heizeinheit zum Erwärmen des Brennstoffzellenabgases.

Bei der erfindungsgemäß aufgebauten Brennstoffzellenabgasanlage fällt zunächst durch das Kühlen des Brennstoffzellenabgases und dabei das Senken der Temperatur des Brennstoffzellenabgases unter den Taupunkt ein Teil des in diesem transportierten Wassers bzw. Wasserdampfs aus dem Brennstoffzellenabgas aus und kann als Kondensat insbesondere in der ersten Abscheideeinheit aufgefangen bzw. gesammelt werden. Bei der in der Brennstoffzellenabgas-Heizeinheit dann erfolgenden Erwärmung des wasser- bzw. wasserdampfentreicherten Brennstoffzellenabgases wird zwar keine Veränderung der Menge des im Brennstoffzellenabgas noch enthaltenen Wasserdampfs herbeigeführt. Aufgrund der Temperaturzunahme sinkt jedoch die relative Feuchte im Brennstoffzellenabgas deutlich ab. Wird das wasserdampfentreicherte Brennstoffzellenabgas dann mit der erhöhten Temperatur zur Umgebung abgegeben, wird eine spontane Kondensation bzw. Nebelbildung vermieden. Das Brennstoffzellenabgas kann, noch bevor dessen Temperatur wieder deutlich absinkt, sich in ausreichendem Ausmaß mit der Umgebungsluft vermischen, so dass durch die damit auftretende Verdünnung eine starke Nebelbildung lokal in dem Bereich, in welchem das Brennstoffzellenabgas aus der Brennstoffzellenabgasanlage austritt, vermieden werden kann.

Für eine effiziente Abkühlung des Brennstoffzellenabgases kann die erste Brennstoffzellenabgas-Kühleinheit einen ersten Wärmetauscher zum Übertragen von Wärme von dem Brennstoffzellenabgas auf ein Kühlmedium, vorzugsweise Kühlflüssigkeit oder Kühlgas, umfassen.

Gleichermaßen kann für eine effiziente Erwärmung des wasserdampfentreicherten Brennstoffzellenabgases die Brennstoffzellenabgas-Heizeinheit einen zweiten Wärmetauscher zum Übertragen von Wärme von einem Heizmedium, vorzugsweise Heizflüssigkeit oder Heizgas, auf das Brennstoffzellenabgas oder/und wenigstens einen elektrisch erregbaren Heizer umfassen.

Um die im Brennstoffzellenabgas transportierte Wärme für einen energieeffizienten Betrieb eines Brennstoffzellensystems nutzen zu können, wird vorgeschlagen, dass ein den ersten Wärmetauscher und den zweiten Wärmetauscher durchströmendes Wärmeträgermedium das Kühlmedium und das Heizmedium bereitstellt. Dieses Wärmeträgermedium kann somit Wärme von dem in einem weiter stromaufwärtigen Teil der Brennstoffzellenabgasanlage strömenden Brennstoffzellenabgas auf das in einem weiter stromabwärtigen Teil der Brennstoffzellenabgasanlage strömende Brennstoffzellenabgas übertragen.

Bei einer alternativen, ebenfalls die im Brennstoffzellenabgas transportierte Wärme nutzenden Ausgestaltungsvariante kann eine den ersten Wärmetauscher und den zweiten Wärmetauscher bereitstellende Wärmetauschereinheit vorgesehen sein, wobei die Wärmetauschereinheit einen von dem Brennstoffzellenabgas durchströmbaren stromaufwärtigen Wärmetauscherbereich und stromabwärts des stromaufwärtigen Wärmetauscherbereichs einen in Wärmeübertragungswechselwirkung mit dem stromaufwärtigen Wärmetauscherbereich stehenden stromabwärtigen Wärmetauscherbereich umfasst. Durch die Wärmeübertragungswechselwirkung der beiden Wärmetauscherbereiche wird ein direkter und ein flüssiges oder gasförmiges Wärmeträgermedium nicht benötigender und somit sehr effizienter Wärmeübertrag erreicht.

Um auch bei diesem im Wesentlichen direkten Wärmeübertrag das nach Abkühlung des Brennstoffzellenabgases auskondensierte Wasser abführen zu können, wird vorgeschlagen, dass die erste Abscheideeinheit stromabwärts des stromaufwärtigen Wärmetauscherbereichs und stromaufwärts des stromabwärtigen Wärmetauscherbereichs angeordnet ist.

Für eine bauliche Integration verschiedener Systembereiche der Brennstoffzellenabgasanlage und somit einen kompakten Aufbau wird weiter vorgeschlagen, dass stromabwärts des stromaufwärtigen Wärmetauscherbereichs oder/und an einem stromabwärtigen Ende des stromaufwärtigen Wärmetauscherbereichs und stromaufwärts des stromabwärtigen Wärmetauscherbereichs oder/und an einem stromaufwärtigen Ende des stromabwärtigen Wärmetauscherbereichs eine zweite Brennstoffzellenabgas-Kühleinheit zum Abführen von Wärme aus dem Brennstoffzellenabgas vorgesehen ist. Durch das Bereitstellen einer derartigen zweiten Brennstoffzellenabgas-Kühleinheit wird zusätzlich zu der bereits im stromaufwärtigen Wärmetauscherbereich erfolgenden Abkühlung das Brennstoffzellenabgas stromaufwärts des stromabwärtigen Wärmetauscherbereichs weiter gekühlt und somit das Auskondensieren von Wasser unterstützt

Dabei kann die zweite Brennstoffzellenabgas-Kühleinheit einen dritten Wärmetauscher zum Übertragen von Wärme von dem Brennstoffzellenabgas auf ein Kühlmedium, vorzugsweise Kühlflüssigkeit oder Kühlgas, umfassen.

Die Wärmetauschereinheit kann ein Wärmetauschereinheitgehäuse umfassen, wobei der stromaufwärtige Wärmetauscherbereich und der stromabwärtige Wärmetauscherbereich in dem Wärmetauschereinheitgehäuse vorgesehen sind. Dabei kann weiter der dritte Wärmetauscher im Wesentlichen in dem Wärmetauschereinheitgehäuse oder/und das Wärmetauschereinheitgehäuse an einer Außenseite umgebend angeordnet sein.

Für einen effizienten Wärmeübertrag für in verschiedenen Teilen der Brennstoffzellenabgasanlage strömendes Brennstoffzellenabgas kann die Wärmetauschereinheit einen Gegenstrom-Wärmetauscher oder einen Kreuzstrom-Wärmetauscher umfassen.

Zum Leiten von Brennstoffzellenabgas zu der ersten Brennstoffzellenabgas-Kühleinheit kann eine zu der ersten Brennstoffzellenabgas-Kühleinheit führende erste Brennstoffzellenabgasleitung vorgesehen sein. Die erste Brennstoffzellenabgasleitung kann dann, wenn Wasser bzw. Wasserdampf primär im Kathodenabgas enthalten ist, eine Kathodenabgasleitung sein.

Um dabei bereits vor der ersten Brennstoffzellenabgas-Kühleinheit im Brennstoffzellenabgas im Wesentlichen in Tröpfchenform transportiertes Wasser abzuscheiden, kann der ersten Brennstoffzellenabgasleitung eine zweite Abscheideeinheit zum Abschneiden von im Brennstoffzellenabgas im Wesentlichen in Tröpfchenform enthaltener Flüssigkeit zugeordnet sein.

Die Brennstoffzellenabgasanlage kann ferner eine zweite Brennstoffzellenabgasleitung, vorzugsweise Anodenabgasleitung, aufweisen, wobei die zweite Brennstoffzellenabgasleitung in die erste Brennstoffzellenabgasleitung oder eine von der Brennstoffzellenabgas-Heizeinheit weg führende Brennstoffzellenabgas-Abgabeleitung einmündet, was bedeutet, dass die beiden jeweils involvierten Leitungen zum Vereinigen der darin geführten Brennstoffzellenabgasströme zusammengeführt sind. Insbesondere dann, wenn die zweite Brennstoffzellenabgasleitung in die erste Brennstoffzellenabgasleitung einmündet, kann auch in dem durch die zweite Brennstoffzellenabgasleitung geleiteten Teil des Brennstoffzellenabgases enthaltenes Wasser bzw. Wasserdampf abgeschieden werden.

Dabei kann insbesondere dann, wenn das durch die zweite Brennstoffzellenabgasleitung geleitete Brennstoffzellenabgas einen relativ geringen Anteil an Wasser bzw. Wasserdampf enthält, die zweite Brennstoffzellenabgasleitung stromabwärts der zweiten Abscheideeinheit in die erste Brennstoffzellenabgasleitung einmünden.

Um zu verhindern, dass in dem Anodenabgas noch enthaltener Restwasserstoff in zu hoher Konzentration zur Umgebung abgegeben wird, kann wenigstens eine Oxidationseinheit, vorzugsweise Katalysatoreinheit oder/und Brenner, zum Oxidieren von in von einer Brennstoffzelle abgegebenem Brennstoffzellenabgas enthaltenem Wasserstoff vorgesehen sein.

Wenn die zweite Brennstoffzellenabgasleitung, also insbesondere die Anodenabgasleitung, im Wesentlichen direkt in die Brennstoffzellenabgas-Abgabeleitung führt, kann wenigstens eine Oxidationseinheit in der zweiten Brennstoffzellenabgasleitung stromaufwärts der Einmündung in die Brennstoffzellenabgas-Abgabeleitung angeordnet sein. Insbesondere dann, wenn die zweite Brennstoffzellenabgasleitung in die erste Brennstoffzellenabgasleitung einmündet, kann wenigstens eine Oxidationseinheit in der ersten Brennstoffzellenabgasleitung stromabwärts der Einmündung der zweiten Brennstoffzellenabgasleitung in die erste Brennstoffzellenabgasleitung angeordnet sein.

Um die Abgabe von beispielsweise durch Kompressoren oder dergleichen generierten Geräusche eines Brennstoffzellensystems über die Brennstoffzellenabgasanlage so weit als möglich zu vermeiden, kann wenigstens ein in einer von der Brennstoffzellenabgas-Heizeinheit weg führenden Brennstoffzellenabgas-Abgabeleitung angeordneter Brennstoffzellenabgas-Schalldämpfer vorgesehen sein.

Wenigstens ein Brennstoffzellenabgas-Schalldämpfer ist vorzugsweise stromabwärts der Einmündung der zweiten Brennstoffzellenabgasleitung in die Brennstoffzellenabgas-Abgabeleitung angeordnet ist, so dass auch der Transport von Geräuschen über das die zweite Brennstoffzellenabgasleitung durchströmende Brennstoffzellenabgas unterdrückt werden kann.

Die Erfindung betrifft ferner ein Brennstoffzellensystem, umfassend eine Brennstoffzelle und eine der Brennstoffzelle zugeordnete, erfindungsgemäß aufgebaute Brennstoffzellenabgasanlage.

Bei diesem Brennstoffzellensystem kann die erste Brennstoffzellenabgasleitung, vorzugsweise über eine Kathodenabgas-Absperreinheit, an einen Kathodenabgasauslass der Brennstoffzelle angeschlossen sein, und die zweite Brennstoffzellenabgasleitung kann, vorzugsweise über eine Anodenabgas-Absperreinheit, an einen Anodenabgasauslass der Brennstoffzelle angeschlossen sein.

Die Erfindung betrifft ferner ein Verfahren zum Betreiben eines Brennstoffzellensystems, insbesondere eines erfindungsgemäß aufgebauten Brennstoffzellensystems, bei welchem Verfahren von einer Brennstoffzelle abgegebenes Brennstoffzellenabgas zum Auskondensieren von Wasser gekühlt wird und das nach dem Auskondensieren von Wasser wasserdampfentreicherte Brennstoffzellenabgas erwärmt wird.

Die vorliegende Erfindung wird nachfolgend mit Bezug auf die beiliegenden Figuren detailliert beschrieben. Es zeigt:
- Fig. 1: ein Brennstoffzellensystem für ein Fahrzeug in prinzipartiger Darstellung;
- Fig. 2: eine der Fig. 1 entsprechende Darstellung einer alternativen Ausgestaltungsart eines Brennstoffzellensystems;
- Fig. 3: eine weitere der Fig. 1 entsprechende Darstellung einer alternativen Ausgestaltungsart eines Brennstoffzellensystems;
- Fig. 4: eine weitere der Fig. 1 entsprechende Darstellung einer alternativen Ausgestaltungsart eines Brennstoffzellensystems;
- Fig. 5: eine weitere der Fig. 1 entsprechende Darstellung einer alternativen Ausgestaltungsart eines Brennstoffzellensystems;
- Fig. 6: eine weitere der Fig. 1 entsprechende Darstellung einer alternativen Ausgestaltungsart eines Brennstoffzellensystems;
- Fig. 7: eine weitere der Fig. 1 entsprechende Darstellung einer alternativen Ausgestaltungsart eines Brennstoffzellensystems;
- Fig. 8: eine weitere der Fig. 1 entsprechende Darstellung einer alternativen Ausgestaltungsart eines Brennstoffzellensystems.

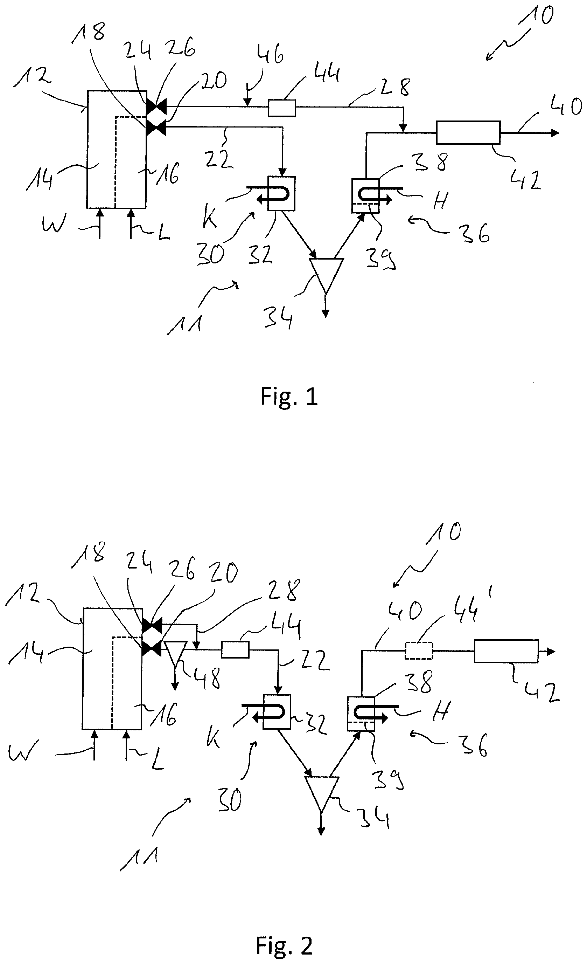

In Fig. 1 ist ein Brennstoffzellensystem für ein Fahrzeug allgemein mit 10 bezeichnet. Das Brennstoffzellensystem 10 umfasst eine im dargestellten Beispiel beispielsweise als PEM-Brennstoffzelle ausgebildete Brennstoffzelle 12 mit einem Anodenbereich 14 und einem Kathodenbereich 16. Dem Anodenbereich 14 wird Wasserstoff bzw. Wasserstoff enthaltendes Gas W zugeführt. Dem Kathodenbereich 16 wird Sauerstoff bzw. Sauerstoff enthaltendes und ggf. auch Wasserdampf enthaltendes Gas L, beispielsweise Luft, zugeführt.

An einen Kathodenabgasauslass 18 der Brennstoffzelle 12 ist über eine Kathodenabgas-Absperreinheit 20, beispielsweise Ventil, Stellklappe oder dergleichen eine erste Brennstoffzellenabgasleitung 22 eine Brennstoffzellenabgasanlage 11 angeschlossen, wobei im dargestellten Ausgestaltungsbeispiel die erste Brennstoffzellenabgasleitung 22 eine Kathodenabgasleitung ist. An einen Anodenabgasauslass 24 der Brennstoffzelle ist über eine Anodenabgas-Absperreinheit 26 eine zweite Brennstoffzellenabgasleitung 28 der Brennstoffzellenabgasanlage 11 angeschlossen, wobei im dargestellten Ausgestaltungsbeispiel die zweite Brennstoffzellenabgasleitung 28 eine Anodenabgasleitung ist.

Die erste Brennstoffzellenabgasleitung 22 führt zu einer ersten Brennstoffzellenabgas-Kühleinheit 30. Die erste Brennstoffzellenabgas-Kühleinheit 30 kann einen ersten Wärmetauscher 32 umfassen, in welchem das die erste Brennstoffzellenabgasleitung 22 durchströmende Brennstoffzellenabgas, also das Kathodenabgas, Wärme auf ein flüssiges oder gasförmiges Kühlmedium K überträgt und dadurch abgekühlt wird. Durch diese Abkühlung kondensiert ein Teil des in dem Kathodenabgas enthaltenen Wasser bzw. Wasserdampfs in einer auf die erste Brennstoffzellenabgas-Kühleinheit 30 folgenden ersten Abscheideeinheit 34 aus bzw. kann in dieser gesammelt und beispielsweise in den Brennstoffzellenprozess zurückgespeist oder zur Umgebung in flüssiger Form abgegeben werden.

In einer stromabwärts auf die erste Abscheideeinheit 34 folgenden Brennstoffzellenabgas-Heizeinheit 36 wird das wasserdampfentreicherte Brennstoffzellenabgas bzw. Kathodenabgas wieder erwärmt. Diese Erwärmung kann dadurch erfolgen, dass auf das die Brennstoffzellenabgas-Heizeinheit 36 durchströmende Brennstoffzellenabgas durch ein Heizmedium H Wärme übertragen wird, wenn die Brennstoffzellenabgas-Heizeinheit 36 als zweiter Wärmetauscher 38 ausgebildet ist. Alternativ oder zusätzlich kann die Brennstoffzellenabgas-Heizeinheit 36 einen elektrisch erregbaren Heizer 39 umfassen, der von dem wasserdampfentreicherten Brennstoffzellenabgas durchströmt wird und dabei Wärme auf dieses überträgt.

Das wasserdampfentreicherte und wieder erwärmte Brennstoffzellenabgas verlässt die Brennstoffzellenabgas-Heizeinheit 36 über eine Brennstoffzellenabgas-Abgabeleitung 40, über welche das wasserdampfentreicherte und wieder erwärmte Kathodenabgas bzw. Brennstoffzellenabgas zur Umgebung abgegeben wird.

Um im Brennstoffzellensystem 10 beispielsweise durch den Betrieb von Kompressoren oder dergleichen entstehende Geräusche nicht über das Brennstoffzellenabgas zur Umgebung weiter zu leiten, kann in der Brennstoffzellenabgas-Abgabeleitung 40 ein Brennstoffzellenabgas-Schalldämpfer 42 vorgesehen sein, welcher, beispielsweise so wie bei Brennkraftmaschinen zugeordneten Schalldämpfern, eine oder mehrere miteinander in Verbindung stehende und von dem Brennstoffzellenabgas durchströmbare Kammern oder/und eine oder mehrere Resonatorkammern umfassen kann.

Das über den Anodenabgasauslass 24 als Brennstoffzellenabgas abgegebene Anodenabgas enthält im Allgemeinen noch einen Restwasserstoffanteil. Die Konzentration des im Anodenabgas noch enthaltenen Wasserstoffs kann dabei derart hoch sein, dass eine Abgabe zur Umgebung hin nicht zulässig ist. In der zweiten Brennstoffzellenabgasleitung 28 kann daher eine ein Ausgestaltungsbeispiel einer Oxidationseinheit bildende Katalysatoreinheit 44 angeordnet sein, in welcher der im Anodenabgas enthaltene Restwasserstoff mit über eine Zuführleitung 46 zugeführtem Sauerstoff oxidiert wird. Über die Zuführleitung 46 kann beispielsweise Luft in die zweite Brennstoffzellenabgasleitung 28 eingeleitet werden.

In dem in Fig. 1 dargestellten Brennstoffzellensystem 10 wird dem über die erste Brennstoffzellenabgasleitung 22 aus der Brennstoffzelle 12 abgegebenen Teil des Brennstoffzellenabgases, also dem Kathodenabgas, durch Abkühlung zunächst ein Teil, insbesondere ein größerer Teil, des darin enthaltenen Wasserdampfs entzogen. Das wasserdampfentreicherte Brennstoffzellenabgas weist aufgrund seiner vergleichsweise geringen Temperatur eine hohe relative Feuchte auf, die nahe bei 100% liegen kann. Durch die Erwärmung dieses wasserdampfentreicherten, gleichwohl jedoch eine hohe relative Feuchte aufweisenden Brennstoffzellenabgases in der Brennstoffzellenabgas-Heizeinheit 36 wird die relative Feuchte des Brennstoffzellenabgases gesenkt, so dass das über die Brennstoffzellenabgas-Abgabeleitung 40 zur Umgebung abgegebene Brennstoffzellenabgas eine deutlich unter 100% liegende relative Feuchte aufweist. Auch wenn dieses zur Umgebung dann abgegebene Brennstoffzellenabgas in Kontakt mit vergleichsweise kalter Umgebungsluft oder in der Umgebung eines Fahrzeugs sich befindenden vergleichsweise kalten Gegenständen kommt, wird eine durch Auskondensieren von Wasser entstehende spontane Nebelbildung vermieden, da, noch bevor die Temperatur des zur Umgebung abgegebenen Brennstoffzellenabgases unter den Taupunkt fällt, eine vergleichsweise starke Durchmischung mit Umgebungsluft und somit eine vergleichsweise starke Verdünnung des Brennstoffzellenabgases erfolgen wird.

Eine alternative Ausgestaltungsform eines Brennstoffzellensystems 10 ist in Fig. 2 dargestellt. Das Brennstoffzellensystem 10 der Fig. 2 zeigt verschiedene Änderungen im Vergleich zum Brennstoffzellensystem der Fig. 1, welche einzeln oder, so wie in Fig. 2 veranschaulicht, auch in Kombination vorgesehen sein können.

In Fig. 2 ist zunächst zu erkennen, dass die zweite Brennstoffzellenabgasleitung 28 in die erste Brennstoffzellenabgasleitung 22 einmündet. Dies bedeutet, dass auch das über die zweite Brennstoffzellenabgasleitung 28 abgegebene Brennstoffzellenabgas, also das Anodenabgas im dargestellten Beispiel, durch die erste Brennstoffzellenabgas-Kühleinheit 30 und die Brennstoffzellenabgas-Heizeinheit 36 geleitet wird. Damit kann auch im Anodenabgas enthaltenes Wasser bzw. darin enthaltener Wasserdampf an der ersten Abscheideeinheit 34 auskondensiert bzw. gesammelt werden.

Um auch bei dieser Ausgestaltung im Anodenabgas enthaltenen Restwasserstoff zu oxidieren, kann die Katalysatoreinheit 44 in der ersten Brennstoffzellenabgasleitung 22 angeordnet sein. Alternativ oder zusätzlich kann eine Katalysatoreinheit 44` in der Brennstoffzellenabgas-Abgabeleitung 40 angeordnet sein. Das Anordnen der Katalysatoreinheit 44 stromaufwärts der ersten Brennstoffzellenabgas-Kühleinheit 30 hat den wesentlichen Vorteil, dass das durch die Katalysatoreinheit 44 geleitete Brennstoffzellenabgas eine vergleichsweise hohe Temperatur aufweist, was zu einem effizienten Betrieb der Katalysatoreinheit 44 beiträgt. Der Vorteil des Positionierens der Katalysatoreinheit 44' in der Brennstoffzellenabgas-Abgabeleitung hat den Vorteil, dass das die Katalysatoranordnung 44` durchströmende Brennstoffzellenabgas einen geringeren Anteil an Wasser bzw. Wasserdampf enthält, was zu einer geringeren Alterung der Katalysatoranordnung 44' beiträgt. Der zur Oxidation des Wasserstoffs erforderliche Sauerstoff kann durch den im Kathodenabgas enthaltenen Restsauerstoff bereitgestellt werden, so dass eine zusätzliche Einleitung von Sauerstoff bzw. Luft nicht erforderlich ist.

In Fig. 2 ist weiter zu erkennen, dass in der ersten Brennstoffzellenabgasleitung 22 beispielsweise stromaufwärts bezüglich der Katalysatoranordnung 44 eine zweite Abscheideeinheit 48 angeordnet ist. In dargestellten Ausgestaltungsbeispiel kann vermittels der zweiten Abscheideeinheit 48 bereits ein Teil des mit dem Kathodenabgas insbesondere in Tröpfchenform mitgetragenen Wassers aus dem Kathodenabgas abgeleitet werden, so dass auch die stromaufwärts der ersten Brennstoffzellenabgas-Kühleinheit 30 und der ersten Abscheideeinheit 34 positionierte Katalysatoreinheit 44 von einem bereits einen verminderten Anteil an Wasser bzw. Wasserdampf enthaltenden Brennstoffzellenabgas durchströmt wird.

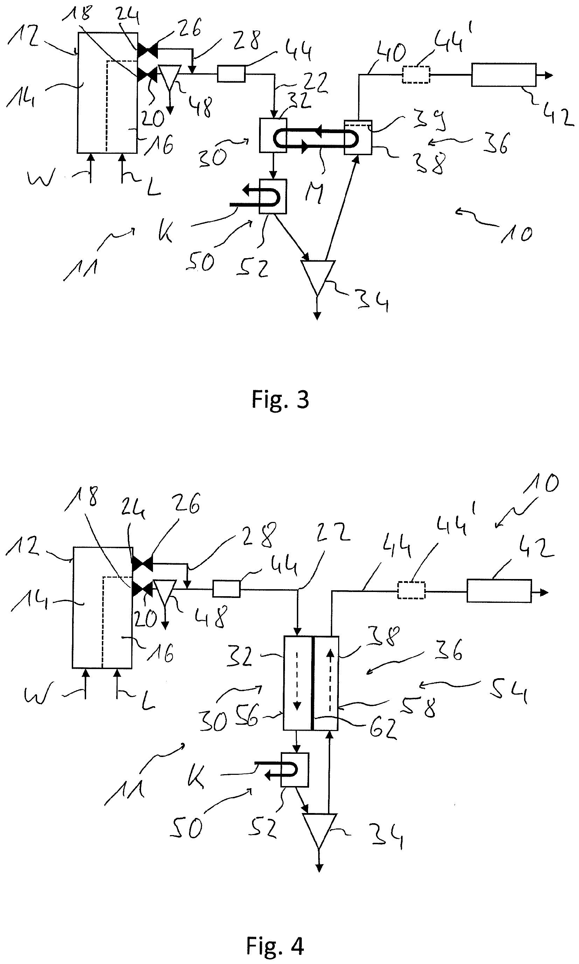

Eine insbesondere im Bereich der ersten Brennstoffzellenabgas-Kühleinheit 30 und der Brennstoffzellenabgas-Heizeinheit 36 abgeänderte Ausgestaltung des Brennstoffzellensystems 10 ist in Fig. 3 veranschaulicht. Bei dieser Ausgestaltung wird in der als erster Wärmetauscher 32 ausgebildeten ersten Brennstoffzellenabgas-Kühleinheit 30 dem diese durchströmenden Brennstoffzellenabgas Wärme vermittels eines Wärmeträgermediums M entzogen, das in einem beispielsweise geschlossenen Kreislauf auch durch die als zweiter Wärmetauscher 38 ausgebildete Brennstoffzellenabgas-Heizeinheit 36 geleitet wird. Somit kann das weiter stromabwärts in der Brennstoffzellenabgasanlage 11 strömende Brennstoffzellenabgas vermittels des weiter stromaufwärts in der Brennstoffzellenabgasanlage 11 strömenden Brennstoffzellenabgases erwärmt werden. Alternativ oder zusätzlich kann in der Brennstoffzellenabgasheizeinheit 36 das diese durchströmende Brennstoffzellenabgas durch ein Heizmedium H oder/und einen elektrisch erregbaren Heizer 39 erwärmt werden.

Um das Brennstoffzellenabgas weiter kühlen zu können, ist stromabwärts der ersten Brennstoffzellenabgas-Kühleinheit 30 eine zweite Brennstoffzellenabgas-Kühleinheit 50 angeordnet. Diese kann beispielsweise einen dritten Wärmetauscher 52 umfassen, in welchem das in der ersten Brennstoffzellenabgas-Kühleinheit 30 bereits gekühlte Brennstoffzellenabgas Wärme auf das Kühlmedium K übertragen kann. So wie vorangehend bereits beschrieben, kondensiert Wasser in der ersten Abscheideeinheit 34 aus, so dass wasserdampfentreichertes Brennstoffzellenabgas in Richtung zu der stromabwärts folgenden Brennstoffzellenabgas-Heizeinheit 36 strömt.

Eine vor allem hinsichtlich der effizienten Wärmeübertragung und der einfachen baulichen Ausgestaltung vorteilhafte Variante ist, bei welcher gleichermaßen die im Brennstoffzellenabgas enthaltene Wärme genutzt wird, um einen weiter stromabwärts strömenden Teil des Brennstoffzellenabgases zu erwärmen, ist in Fig. 4 dargestellt. Bei der in Fig. 4 dargestellten Ausgestaltungsform der Brennstoffzellenabgasanlage 11 ist eine allgemein mit 54 bezeichnete Wärmetauschereinheit vorgesehen, welche im dargestellten Ausgestaltungsbeispiel als Gegenstrom-Wärmetauscher ausgebildet ist. Die Wärmetauschereinheit 54 umfasst einen stromaufwärtigen Wärmetauscherbereich 56, welcher die erste Brennstoffzellenabgas-Kühleinheit 30 bzw. den ersten Wärmetauscher 32 bereitstellt.

Die Wärmetauschereinheit 54 umfasst ferner einen stromabwärtigen Wärmetauscherbereich 58, welcher die Brennstoffzellenabgas-Heizeinheit 36 bzw. den zweiten Wärmetauscher 38 bereitstellt. Die beiden Wärmetauscherbereiche 56, 58 können in einem Wärmetauschereinheitgehäuse 60 der Wärmetauschereinheit 54 kanalartig ausgebildet und durch eine oder mehrere Trennwände 62 voneinander getrennte Strömungskanäle bereitstellen, in welchen das Brennstoffzellenabgas im Wesentlichen in zueinander entgegengesetzten Richtungen strömt und dadurch Wärme von dem den stromaufwärtigen Wärmetauscherbereich 56 durchströmenden Teil des Brennstoffzellenabgases auf den den stromabwärtigen Wärmetauscherbereich 58 durchströmenden Teil des Brennstoffzellenabgases überträgt.

Es ist darauf hinzuweisen, dass auch bei dieser Ausgestaltung in der Brennstoffzellenabgas-Heizeinheit 36, also im stromabwärtigen Wärmetauscherbereich 58, das dort strömende Brennstoffzellenabgas zusätzlich durch ein Heizmedium oder/und einen elektrisch erregbaren Heizer erwärmt werden kann, so wie vorangehend beschreiben.

Das den stromaufwärtigen Wärmetauscherbereich 56 durchströmende und diesen verlassende Brennstoffzellenabgas wird zu der stromabwärts auf den stromaufwärtigen Wärmetauscherbereich 56 folgenden zweiten Brennstoffzellenabgas-Heizeinheit 50 bzw. zum dritten Wärmetauscher 52 geleitet, wo es Wärme an das Kühlmedium K abgibt und somit weiter gekühlt wird. In der ersten Abscheideeinheit 34 wird das durch die weitere Abkühlung aus dem Brennstoffzellenabgas auskondensierende Wasser gesammelt. Das wasserdampfentreicherte Brennstoffzellenabgas strömt dann zum stromabwärtigen Wärmetauscherbereich 58 weiter, wo es durch die thermische Wechselwirkung mit dem im stromabwärtigen Wärmetauscherbereich 56 strömenden Brennstoffzellenabgas und ggf. zusätzlich durch ein Heizmedium oder/und einen elektrisch erregbaren Heizer erwärmt wird.

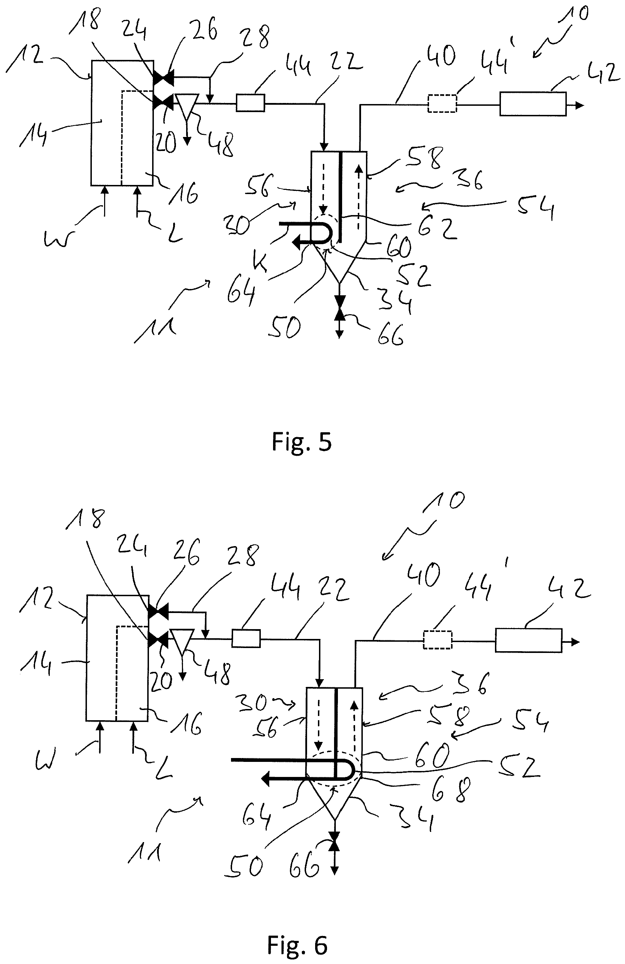

Die Fig. 5 zeigt eine Ausgestaltungsvariante, bei welcher die zweite Brennstoffzellenabgas-Kühleinheit 50 und die erste Abscheideeinheit 34 baulich mit der Wärmetauschereinheit 54 zusammengefasst sind. Wie in Fig. 5 zu erkennen, kann der dritte Wärmetauscher 52 der zweiten Brennstoffzellenabgas-Kühleinheit 50 in den stromaufwärtigen Wärmetauscherbereich 56, insbesondere ein stromabwärtiges Ende 64, desselben integriert sein. An bzw. nach diesem stromabwärtigen Ende 64 des stromaufwärtigen Wärmetauscherbereichs 56 erfolgt ein strömungstechnischer Übergang zum zur ersten Abscheideeinheit 34 und von dieser zum stromabwärtigen Wärmetauscherbereich 58. An der ersten Abscheideeinheit 34 und damit auch im Wärmetauschereinheitgehäuse 60 der Wärmetauschereinheit 54 angesammeltes Wasser kann beispielsweise über eine Absperreinheit 66 zur Umgebung abgegeben oder in dem Brennstoffzellenprozess rückgespeist werden.

Für einen sehr effizienten Wärmeübertrag kann der dritte Wärmetauscher 52 Rippen aufweisen, welche die zur thermischen Wechselwirkung mit dem im stromaufwärtigen Wärmetauscherbereich 56 strömenden Brennstoffzellenabgas zur Verfügung stehende Oberfläche vergrößern.

Bei der Fig. 6 dargestellten Abwandlung des in Fig. 5 veranschaulichten Aufbauprinzips ist die zweite Brennstoffzellenabgas-Kühleinheit 50 sowohl in den stromaufwärtigen Wärmetauscherbereich 56, insbesondere im Bereich des stromabwärtigen Endes 64 desselben, als auch in dem stromaufwärtigen Wärmetauscherbereich 58, insbesondere ein stromaufwärtiges Ende 68 desselben, integriert. Somit kann im gesamten Übergangsbereich vom stromaufwärtigen Wärmetauscherbereich 58, also der ersten Brennstoffzellenabgas-Kühleinheit 30, zum stromabwärtigen Wärmetauscherbereich 58, also der Brennstoffzellenabgas-Heizeinheit 36, durch Kühlen des Brennstoffzellenabgases Wasser bzw. Wasserdampf auskondensiert und in der ersten Abscheideeinheit 34 aufgenommen bzw. gesammelt werden.

Auch bei dieser Ausgestaltung kann für einen sehr effizienten Wärmeübertrag der dritte Wärmetauscher 52 Rippen aufweisen, welche die zur thermischen Wechselwirkung mit dem im stromaufwärtigen Wärmetauscherbereich 56 strömenden Brennstoffzellenabgas zur Verfügung stehende Oberfläche vergrößern. Es ist weiter darauf hinzuweisen, dass auch bei dieser Ausgestaltungsform eine zusätzliche Erwärmung des den stromabwärtigen Wärmetauscherbereich 58 durchströmenden Brennstoffzellenabgases durch ein Heizmedium oder/und einen elektrisch erregbaren Heizer erfolgen kann.

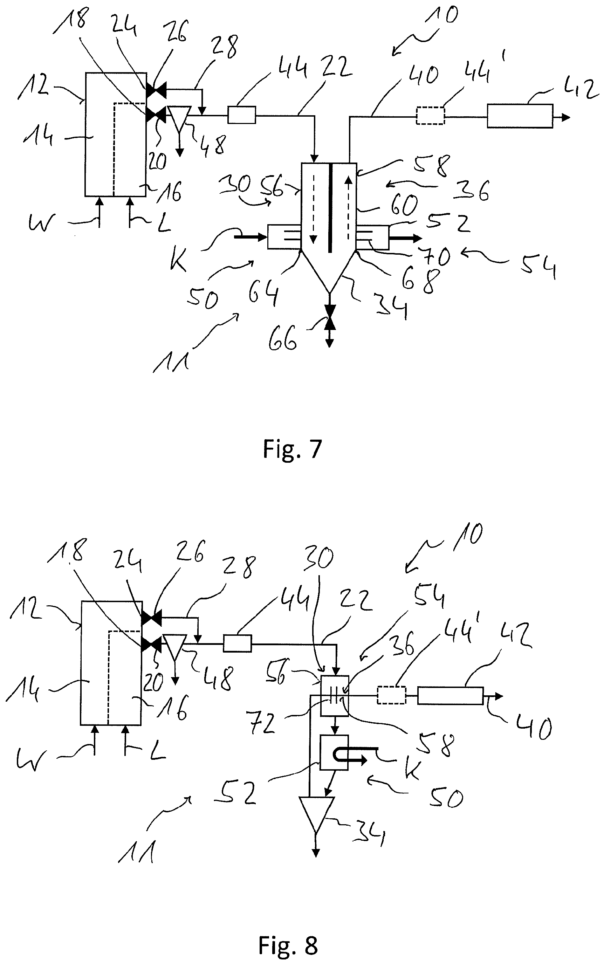

Auch bei der in Fig. 7 dargestellten Ausgestaltungsvariante einer Brennstoffzellenabgasanlage 11 wird an der Wärmetauschereinheit 54 Wärme im Bereich des stromabwärtigen Endes 64 des stromaufwärtigen Wärmetauscherbereichs 56 und im Bereich des stromaufwärtigen Endes 66 des stromabwärtigen Wärmetauscherbereichs 58 aus dem Brennstoffzellenabgas abgezogen. Zu diesem Zwecke umgibt der erste Wärmetauscher 32 der ersten Brennstoffzellenabgas-Kühleinheit 30 das Wärmetauschereinheitgehäuse 60 der Wärmetauschereinheit 54 an seiner Außenseite und ist von dem Kühlmedium K durchströmbar. Zur verstärkten thermischen Wechselwirkung und damit zur verbesserten Wärmeabfuhr aus dem die Wärmetauschereinheit 54 durchströmenden Brennstoffzellenabgas können an der Außenseite des Wärmetauschereinheitgehäuse 60 Wärmeübertragungsrippen 70 vorgesehen sein, durch welche die zur Abgabe von Wärme auf das Kühlmedium K zur Verfügung stehende Oberfläche vergrößert wird.

Eine weitere alternative Ausgestaltung, bei welcher in einer Wärmetauschereinheit 54 Wärme von dem in einem weiter stromaufwärtigen Teil der Brennstoffzellenabgasanlage 11 strömenden Brennstoffzellenabgas auf das in einem weiter stromabwärtigen Teil der Brennstoffzellenabgasanlage 11 strömende Brennstoffzellenabgas übertragen werden kann, ist in Fig. 8 veranschaulicht. Bei dieser Ausgestaltungsform ist die Wärmetauschereinheit 54 als Kreuzstrom-Wärmetauscher ausgebildet. Im Wärmetauschereinheitgehäuse 60 ist ein im Wesentlichen den stromaufwärtigen Wärmetauscherbereich 56 bereitstellendes Volumen gebildet, welches von dem über die erste Brennstoffzellenabgasleitung 22 zugeführten Brennstoffzellenabgas durchströmt wird. Das durch diesen stromaufwärtigen Wärmetauscherbereich 56 geleitete Brennstoffzellenabgas durchströmt dann die zweite Brennstoffzellenabgas-Kühleinheit 50 bzw. deren dritten Wärmetauscher 52 und gibt dabei Wärme an das Kühlmedium K ab. Nach dem Durchströmen der ersten Abscheideeinheit 34 strömt das wasserdampfentreicherte Brennstoffzellenabgas dann durch einen den stromabwärtigen Wärmetauscherbereich 58 bereitstellenden und im Wärmetauschereinheitgehäuse 60 verlaufenden Leitungsbereich, an welchem Wärmeübertragungsrippen 72 zur verstärkten thermischen Wechselwirkung mit dem den stromaufwärtigen Wärmetauscherbereich 56 durchströmenden Brennstoffzellenabgas vorgesehen sein können.

Auch bei dieser Ausgestaltungsform verlässt das Brennstoffzellenabgas den stromaufwärtigen Wärmetauscherbereich 58 bzw. die Wärmetauschereinheit 54 erwärmt und strömt dann beispielsweise zu der Katalysatoreinheit 44` und dem Schalldämpfer 42, bevor es erwärmt und somit mit vergleichsweise geringer relativer Feuchte zur Umgebung abgegeben wird.

Auch bei den in den Fig. 7 und 8 dargestellten Ausgestaltungsformen können zur zusätzlichen Erwärmung dem stromabwärtigen Wärmetauscherbereich 58 die vorangehend beschriebenen Maßnahmen zusätzlich zugeordnet sein. Es kann also eine zusätzliche Erwärmung des den stromabwärtigen Wärmetauscherbereich 58 durchströmenden, wasserdampfentreicherten Brennstoffzellenabgases durch ein Heizmedium oder/und einen elektrisch erregbaren Heizer erfolgen.

Bei allen vorangehend beschriebenen Ausgestaltungsformen können, sofern eingesetzt, das Kühlmedium K oder/und das Heizmedium H durch Flüssigkeiten bzw. Gase bereitgestellt werden, wobei insbesondere das Kühlmedium K die darin aufgenommene Wärme in einem weiteren Wärmetauscher zur Umgebung abgeben kann. Das Kühlmedium K kann beispielsweise auch durch die Umgebungsluft bereitgestellt sein, so dass der erste Wärmetauscher beispielsweise eine Mehrzahl von von Umgebungsluft umströmbaren Rippen umfassen kann. Das Heizmedium H kann beispielsweise bei dem in der Katalysatoreinheit 44 bzw. 44` ablaufenden katalytischen Oxidationsprozess erwärmt werden. Alternativ kann anstelle einer derartigen Katalysatoreinheit oder zusätzlich zu dieser Katalysatoreinheit zum Oxidieren des im Anodenabgas noch enthaltenen Restwasserstoffs als ein weiteres Beispiel einer Oxidationseinheit ein Brenner vorgesehen sein, in welchem der Restwasserstoff mit Sauerstoff, beispielsweise dem im Kathodenabgas enthaltenen Restsauerstoff, verbrannt wird. Die dabei entstehende Wärme kann in einem dem Brenner zugeordneten Wärmetauscher auf das Heizmedium H und von diesem auf das den zweiten Wärmetauscher 38 durchströmende Brennstoffzellenabgas übertragen werden.

Bei einer erfindungsgemäß aufgebauten Brennstoffzellenabgasanlage kann, wie dies insbesondere die Ausgestaltungsformen der Fig. 4 bis 7 veranschaulichen, eine bauliche Verknüpfung bzw. Verschmelzung verschiedener Systembereiche, insbesondere der ersten Brennstoffzellenabgas-Kühleinheit, der ersten Abscheideeinheit und der Brennstoffzellenabgas-Heizeinheit, gegebenenfalls auch mit der zweiten Brennstoffzellenabgas-Kühleinheit vorgesehen sein, so dass diese verschiedenen Systembereiche unmittelbar aneinander anschließen bzw. einander in strömungstechnischer Hinsicht auch überlappen. So kann vermittels der ersten Abscheideeinheit bereits im Bereich der ersten Brennstoffzellenabgas-Kühleinheit oder/und auch noch im Bereich der Brennstoffzellenabgas-Heizeinheit Wasserdampf bzw. Wasser aus dem Brennstoffzellenabgas abgeschieden und zum Beispiel in flüssiger Form gesammelt werden.

Es ist darauf hinzuweisen, dass der vorangehend beschriebene Aufbau einer Brennstoffzellenabgasanlage auch bei nach anderen Funktionsprinzipien arbeitenden Brennstoffzellen eingesetzt werden kann, bei welchen auch oder alternativ im Anodenbereich ein größerer Anteil an Wasser bzw. Wasserdampf entsteht und über das Anodenabgas aus der Brennstoffzelle abgetragen wird. In einem derartigen Falle könnte beispielsweise die erste Brennstoffzellenabgasleitung mit dem Anodenabgasauslass der Brennstoffzelle verbunden sein, während die zweite Brennstoffzellenabgasleitung mit dem Kathodenabgasauslass der Brennstoffzelle verbunden sein könnte.

## Patentansprüche

1. Brennstoffzellenabgasanlage, insbesondere für ein Fahrzeug, umfassend:
- eine von Brennstoffzellenabgas durchströmbare erste Brennstoffzellenabgas-Kühleinheit (30) zum Abführen von Wärme aus dem Brennstoffzellenabgas,
- im Bereich oder/und stromabwärts der ersten Brennstoffzellenabgas-Kühleinheit (30), eine erste Abscheideeinheit (34) zum Abscheiden von im Brennstoffzellenabgas enthaltenem Kondensat,
- im Bereich oder/und stromabwärts der ersten Abscheideeinheit (34), eine Brennstoffzellenabgas-Heizeinheit (36) zum Erwärmen des Brennstoffzellenabgases.

2. Brennstoffzellenabgasanlage nach Anspruch 1, **dadurch gekennzeichnet, dass** die erste Brennstoffzellenabgas-Kühleinheit (30) einen ersten Wärmetauscher (32) zum Übertragen von Wärme von dem Brennstoffzellenabgas auf ein Kühlmedium (K), vorzugsweise Kühlflüssigkeit oder Kühlgas, umfasst,
oder/und
dass die Brennstoffzellenabgas-Heizeinheit (36) einen zweiten Wärmetauscher (38) zum Übertragen von Wärme von einem Heizmedium (H), vorzugsweise Heizflüssigkeit oder Heizgas, auf das Brennstoffzellenabgas umfasst, oder/und dass die Brennstoffzellenabgas-Heizeinheit (36) wenigstens einen elektrisch erregbaren Heizer (39) umfasst.

3. Brennstoffzellenabgasanlage nach Anspruch 2, **dadurch gekennzeichnet, dass** ein den ersten Wärmetauscher (32) und den zweiten Wärmetauscher (38) durchströmendes Wärmeträgermedium (M) das Kühlmedium (K) und das Heizmedium (H) bereitstellt.

4. Brennstoffzellenabgasanlage nach Anspruch 2, **gekennzeichnet durch** eine den ersten Wärmetauscher (32) und den zweiten Wärmetauscher (38) bereitstellende Wärmetauschereinheit (54), wobei die Wärmetauschereinheit (54) einen von dem Brennstoffzellenabgas durchströmbaren stromaufwärtigen Wärmetauscherbereich (56) und stromabwärts des stromaufwärtigen Wärmetauscherbereichs (56) einen in Wärmeübertragungswechselwirkung mit dem stromaufwärtigen Wärmetauscherbereich (56) stehenden stromabwärtigen Wärmetauscherbereich (58) umfasst.

5. Brennstoffzellenabgasanlage nach Anspruch 4, **dadurch gekennzeichnet, dass** die erste Abscheideeinheit (34) stromabwärts des stromaufwärtigen Wärmetauscherbereichs (56) und stromaufwärts des stromabwärtigen Wärmetauscherbereichs (58) angeordnet ist,
vorzugsweise wobei stromabwärts des stromaufwärtigen Wärmetauscherbereichs (56) oder/und an einem stromabwärtigen Ende (64) des stromaufwärtigen Wärmetauscherbereichs (56) und stromaufwärts des stromabwärtigen Wärmetauscherbereichs (58) oder/und an einem stromaufwärtigen Ende (68) des stromabwärtigen Wärmetauscherbereichs (58) eine zweite Brennstoffzellenabgas-Kühleinheit (50) zum Abführen von Wärme aus dem Brennstoffzellenabgas vorgesehen ist.

6. Brennstoffzellenabgasanlage nach Anspruch 5, **dadurch gekennzeichnet, dass** die zweite Brennstoffzellenabgas-Kühleinheit (50) einen dritten Wärmetauscher (52) zum Übertragen von Wärme von dem Brennstoffzellenabgas auf ein Kühlmedium (K), vorzugsweise Kühlflüssigkeit oder Kühlgas, umfasst,
vorzugsweise wobei die Wärmetauschereinheit (54) ein Wärmetauschereinheitgehäuse (60) umfasst, wobei der stromaufwärtige Wärmetauscherbereich (56) und der stromabwärtige Wärmetauscherbereich (58) in dem Wärmetauschereinheitgehäuse (60) vorgesehen sind, und wobei der dritte Wärmetauscher (52) im Wesentlichen in dem Wärmetauschereinheitgehäuse (60) angeordnet ist oder/und das Wärmetauschereinheitgehäuse (60) an einer Außenseite umgebend angeordnet ist.

7. Brennstoffzellenabgasanlage nach einem der Ansprüche 4-6, **dadurch gekennzeichnet, dass** die Wärmetauschereinheit (54) einen Gegenstrom-Wärmetauscher oder einen Kreuzstrom-Wärmetauscher umfasst.

8. Brennstoffzellenabgasanlage nach einem der Ansprüche 1-7, **gekennzeichnet durch** eine zu der ersten Brennstoffzellenabgas-Kühleinheit (30) führende erste Brennstoffzellenabgasleitung (22), vorzugweise Kathodenabgasleitung, vorzugsweise wobei der ersten Brennstoffzellenabgasleitung (22) eine zweite Abscheideeinheit (48) zum Abschneiden von im Brennstoffzellenabgas im Wesentlichen in Tröpfchenform enthaltener Flüssigkeit zugeordnet ist.

9. Brennstoffzellenabgasanlage nach Anspruch 8, **gekennzeichnet durch** eine zweite Brennstoffzellenabgasleitung (28), vorzugsweise Anodenabgasleitung, wobei die zweite Brennstoffzellenabgasleitung (28) in die erste Brennstoffzellenabgasleitung (22) oder eine von der Brennstoffzellenabgas-Heizeinheit (36) weg führende Brennstoffzellenabgas-Abgabeleitung (40) einmündet.

10. Brennstoffzellenabgasanlage nach Anspruch 9, **dadurch gekennzeichnet, dass** die zweite Brennstoffzellenabgasleitung (28) stromabwärts der zweiten Abscheideeinheit (48) in die erste Brennstoffzellenabgasleitung (22) einmündet.

11. Brennstoffzellenabgasanlage nach einem der Ansprüche 1-10, **dadurch gekennzeichnet, dass** wenigstens eine Oxidationseinheit, vorzugsweise Katalysatoreinheit (44, 44`) oder/und Brenner, zum Oxidieren von in Brennstoffzellenabgas enthaltenem Wasserstoff vorgesehen ist.

12. Brennstoffzellenabgasanlage nach Anspruch 11, sofern auf Anspruch 9 oder 10 rückbezogen, **dadurch gekennzeichnet, dass** wenigstens eine Oxidationseinheit in der zweiten Brennstoffzellenabgasleitung (28) stromaufwärts der Einmündung in die Brennstoffzellenabgas-Abgabeleitung (40) angeordnet ist, oder/und dass wenigstens Oxidationseinheit in der ersten Brennstoffzellenabgasleitung (22) stromabwärts der Einmündung der zweiten Brennstoffzellenabgasleitung (28) in die erste Brennstoffzellenabgasleitung (22) angeordnet ist.

13. Brennstoffzellenabgasanlage nach einem der Ansprüche 1-12, **gekennzeichnet durch** wenigstens einen in einer von der Brennstoffzellenabgas-Heizeinheit (36) weg führenden Brennstoffzellenabgas-Abgabeleitung (40) angeordneten Brennstoffzellenabgas-Schalldämpfer (42).

14. Brennstoffzellenabgasanlage nach Anspruch 13, sofern auf Anspruch 9 rückbezogen, **dadurch gekennzeichnet, dass** wenigstens ein Brennstoffzellenabgas-Schalldämpfer (42) stromabwärts der Einmündung der zweiten Brennstoffzellenabgasleitung (28) in die Brennstoffzellenabgas-Abgabeleitung (40) angeordnet ist.

15. Brennstoffzellensystem, umfassend eine Brennstoffzelle (12) und eine der Brennstoffzelle zugeordnete Brennstoffzellenabgasanlage (11) nach einem der Ansprüche 1-14.

16. Brennstoffzellensystem nach Anspruch 15, sofern auf Anspruch 9 rückbezogen, **dadurch gekennzeichnet, dass** die erste Brennstoffzellenabgasleitung (22), vorzugsweise über eine Kathodenabgas-Absperreinheit (20), an einen Kathodenabgasauslass (18) der Brennstoffzelle (12) angeschlossen ist, und dass die zweite Brennstoffzellenabgasleitung (28), vorzugsweise über eine Anodenabgas-Absperreinheit (26), an einen Anodenabgasauslass (24) der Brennstoffzelle (12) angeschlossen ist.

17. Verfahren zum Betreiben eines Brennstoffzellensystems (10), insbesondere eines Brennstoffzellensystems (10) nach Anspruch 15 oder 16, bei welchem Verfahren von einer Brennstoffzelle (12) abgegebenes Brennstoffzellenabgas zum Auskondensieren von Wasser gekühlt wird und das nach dem Auskondensieren von Wasser wasserdampfentreicherte Brennstoffzellenabgas erwärmt wird.
